# EUROPEAN PATENT APPLICATION

(11) **EP 2 309 693 A1**
(43) Date of publication of application: **13.04.2011**
(21) Application number: 09012888.5
(22) Date of filing: 12.10.2009
(51) Int. Cl.: H04L 29/06, H04W 8/20, H04W 28/22, H04M 7/00

(54) **Improved voice over IP communication method**

(71) Applicant: Qnective Inc., 8050 Zürich (CH)
(72) Inventor: Ortiz, Oswald, 4410 Liestal (CH)
(74) Representative: Reinhardt, Thomas Johannes

(57) **Abstract**

The present invention relates to the field of telecommunication wherein voice data is transmitted as data via the Internet, and in particular to method and system for operating a telephone call between a caller telephone device -mobile phone or fixnet phone- and a called mobile communication device, wherein said communication is at least partly performed by using Voice-over-IP functionality. In order to improve such method and system it a specific separation of signaling information and voice information is used in combination with error-handling and package losses; for the signaling the TCP "network layer" is used, while all voice data is sent using the UDP "network layer". Further, a modified form of the AMR CODEC is used.

## Description

### 1. BACKGROUND OF THE INVENTION

### 1.1. FIELD OF THE INVENTION

The present invention relates to the field of telecommunication wherein voice data is transmitted as data via the Internet.

### 1.2. DESCRIPTION AND DISADVANTAGES OF PRIOR ART

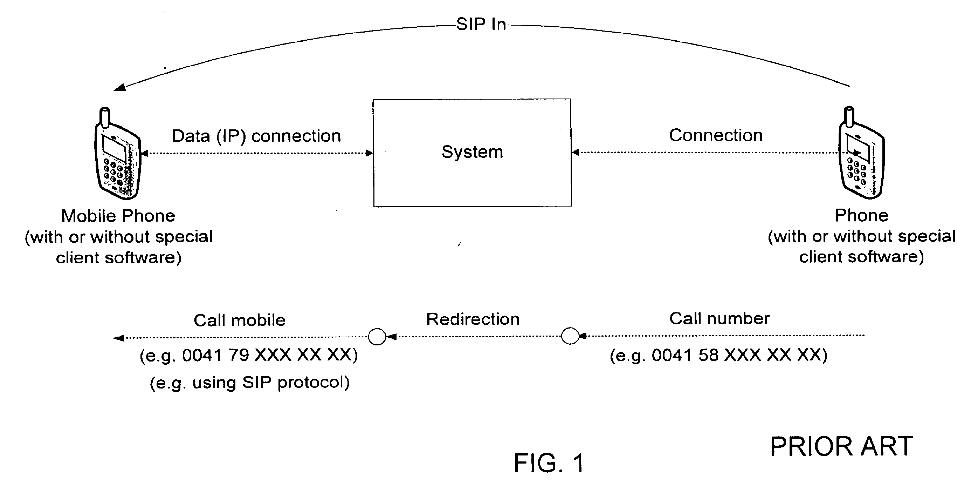

There are several technologies (e.g. SIP) and companies (e.g. Skype, Truephone, Fring, etc.). on the market which allow having similar voice communication using a data channel. To use the services of such technologies special software needs to get installed on the devices/clients. This is illustrated in Figure 1.

Prior art Dial-In implementations (e.g. offered by several PBX or soft switch suppliers) are based on using an indirect number which is redirected to reach a mobile phone.

In this scenario the SIP (Session Initiation Protocol) protocol is used for setup, operation and completion of a communication session.

Additional information on prior art technology is given:
- www.esti.org: Standards for Information & Communications Technologies including fixed, mobile, radio, broadcast, internet and several other areas.
- www.ietf.org: SIP.
- www.itu.int: SS7

Disadvantageously, there is no satisfying integration of Voice over IP technology, or Voice over Data, into a mobile communication operator environment and logic. Prior art SIP based integration yields a poor voice transmission quality. When either, the caller person or the called person moves within his radio cell with moderate speed only, the transmission quality is further decreased.

Further disadvantageously, in case of using SIP, prior art uses a standard port at the mobile phone and a respective standard CODEC engine for processing received data, which represents a high potential for Third Persons to monitor the call or to interrupt it.

### 1.3. OBJECTIVES OF THE INVENTION

The objective of the present invention is to provide an improved communication method.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims. As the invention is distributed between a server part and a client part, which closely cooperate, of course, as they perform a common data communication, there are forcedly a plurality of independent claims of the same category.

According to a first aspect of the present invention it provides a mobile communication client device for sending and receiving voice data coded in a digital format over a packet-switched network, comprising a specialized modification of a prior art AMR CODEC software component being implemented at the mobile communication device ready to encode a voice signal into digital data and to decode digital voice data into an analogue signal including error detection and correction.

According to a second aspect a Server Computer device is the counterpart for above client. The server part performs the essential features as disclosed in the server-related claims.

As to the method based aspects of the invention a specific separation of signaling information and voice information is used in combination with error-handling and package losses; for the signaling the TCP "network layer" is used, while all voice data is sent using the UDP "network layer".

By that the prior art cell-handover technology used to handle the "interrupts" of ca. 250 millisec when using the prior art GSM technology and moving between radio cells can be continued to be used without modification and without major negative effects to voice transmission quality.

Further, the inventional methods and systems contribute to balance GSM network load, because the bandwidth-consuming data traffic is not sent via the GSM network, but instead, via the Internet.

According to a general method-related aspect the present invention discloses a method for operating a telephone call between a caller telephone device - i.e., a mobile phone or fixnet phone - and a called mobile communication device, e.g. a mobile phone, PDA, or a mobile and desktop client, since they can also be used together and representing a link between the mobile and the IP world, etc, wherein the communication is at least partly performed by using Voice-over-IP functionality, characterised by the steps of:
a) transmitting signalization information of the call via the TCP protocol, and
b) transmitting voice data of the call via the UDP protocol.

The following advantages result:
The quality of transmitted voice is significantly higher compared to prior art mobile VoIP methods, even when one or both communication partner(s) move with high speed within their radio cells.
Further, the caller may use the Telephone number of the called person directly, while using Voice over IP for transmitting the call. This saves costs at the caller side and makes the caller independent of roaming fees, -relevant for the GSM-provider - does not decrease the available GSM bandwidth at the called persons's mobile communication provider.

Further advantageously, a particular modification of the AMR CODEC is used for converting an audio signal corresponding to the voice to digital data and vice versa, which is modified by tolerating transmission bit rates until 5,7 kbit/s.

Against the skilled person's expectation that a lower transmission bit rate decreases the voice quality, the surprising advantage results that the call audio quality is by far better compared to a prior art CODEC implemented in the prior art used SIP protocol.

This is due to the fact that according to a preferred embodiment of the invention the modification comprises the rule that the digitalization of voice is done in packets of only 20 milliseconds voice length. The packets are delivered from the sender site including automatic error correction.

At the receiving site, the voice string is then assembled according to the delivery. Due to the small packet length the negative impact of a corrupt data packet corresponding to a interval length of only 20 millisec of voice is quite low compared to larger packet lengths of prior art CODECs. In case a 20-millisec data packet is lost and thus not comprised of the assembled string, which the partners is listening to, he would not even be aware of the fact that something is missed in the received voice string. So, in effect, he basically notices the resulting assembled voice strings as voice sound having a higher quality than those of comparable prior art CODECs.

The general method performed during an inventional call comprises the following steps of:
a) the caller provider registering an incoming login request issued by a caller requesting a telephone call by using a data communication session,
b) the caller's provider system switching the call request to the mobile communication provider system of the called mobile communication device,
c) the mobile communication provider system of the called mobile communication device, by using its HLR functionality, invoking a data channel including the session parameters, such as IP address of the called device, ID of the caller device and that of the called device to a (VoIP) server application managing the requested data communication session to the called mobile communication device via the Internet,
d) the (VoIP) server application establishing or using a respective data channel to the called mobile phone device by invoking a operational communication dialogue with a respective client (VoIP) application implemented at the called mobile phone device able to convert received digital data to an analogue voice signal to be output by means of a speaker unit to the called person,
e) during operation of the call the caller's provider system:
   1) said mobile communication provider system receiving analogue signals or respective digital data corresponding to the caller's voice signal,
   2) said mobile communication provider system forwarding said data to said (VoIP) server application,
   3) said (VoIP) server application sending said data to the receiving port of said called mobile phone device,
   4) said client (VoIP) application implemented at said called device converting said received data into an analogue voice signal to be output via speakers to the called person,
   5) said client (VoIP) application converting an analogue voice signal associated with the called person into digital data and sending said data to said (VoIP) server application via the Internet,
   6) said (VoIP) server application sending said digital data to said mobile communication provider system of the called mobile communication device
   7) said mobile communication provider system of the called mobile communication device sending said digital data or respective analogue data to said caller provider,
   8) said caller provider transmitting said data or respective signal back to said caller telephone device.

The Internet server acting as a communication manager, implemented in the mobile communication provider system of the called mobile phone implements preferably a piece of software implementing a method for operating a telephone call between a caller telephone device mobile phone or fixnet phone, and a called mobile communication device, wherein said communication is at least partly performed by using Voice-over-IP functionality,
which characterised by the steps of:
said (VoIP) server application establishing or using a pre-established respective data channel to the called mobile phone device by invoking or using, respectively, an operational communication dialogue with a respective client (VoIP) application implemented at the called mobile phone device, and
during operation of the call said (VoIP) server application sending said call data to the receiving port of said called mobile phone device, and
said (VoIP) server application sending digital data corresponding to the called person's voice to said mobile communication provider system of the called mobile communication device,
wherein the signalization information of the call is transmitted via the TCP protocol, and
the voice data of the call is transmitted via the UDP protocol.

The client application implemented in the called mobile phone device acts as communication partner in interaction with the communication manager of the Internet based server application, and implements a method for operating a telephone call between a caller telephone device mobile phone or fixnet phone and a called mobile communication device, wherein said communication is at least partly performed by using Voice-over-IP functionality,
which is characterised by the steps of:
a) using a respective data channel to the Internet server communication manager by using a operational communication dialogue with a respective server (VoIP) application,
b) during operation of the call the caller's provider system,
c) said client (VoIP) application implemented at said called device converting data received from said server application into an analogue voice signal to be output via speakers to the called person,
   5) said client (VoIP) application converting an analog voice signal associated with the called person into digital data and sending said data to said (VoIP) server application via the Internet,
d) wherein the signalization information of the call is transmitted via the TCP protocol, and
e) the voice data of the call is transmitted via the UDP protocol.

Further, the inventional disclosure is implemented in a respective electronic data processing system acting as Server Computer interconnected between the prior art GSM provider system and the called person's mobile phone, for operating such telephone call. The server implements a functional server application component for performing the respective server steps of above methods.

Further, a mobile communication device is subject to the invention which is ready for operating such telephone call having a functional client application component, i.e., a preprogrammed applet performing respective client method steps.

### 3. BRIEF DESCRIPTION OF THE DRAWINGS

The present invention is illustrated by way of example and is not limited by the shape of the figures of the drawings in which:
Figure 1 illustrates the most basic structural components of a prior art hardware and software environment used for a prior art method,
Figure 2 is an overview representation over the inventional system,
Figure 3 illustrates the most basic structural components of a inventional hardware and software environment used for a preferred embodiment of the inventional method,
Figure 4 illustrates the major building blocks of a preferred embodiment of the server system interconnected between the calling partner's devices,
Figure 5A and 5B (in continuation) are respective schematic interaction diagrams illustrating the control flow of the most important steps of a preferred embodiment of the inventional communication method.

### 4. DETAILED DESCRIPTION OF THE PREFERRED EMBODIMENT

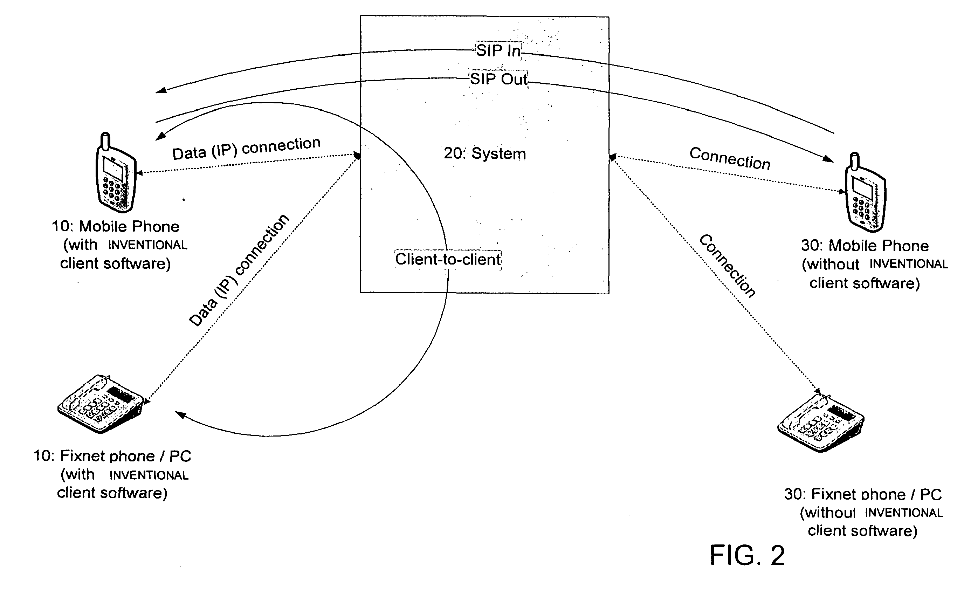

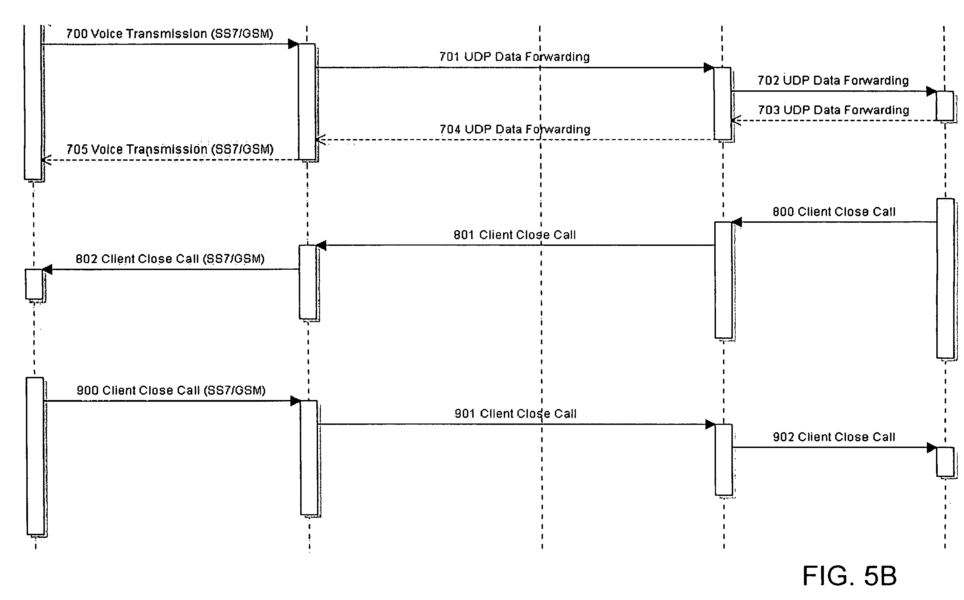

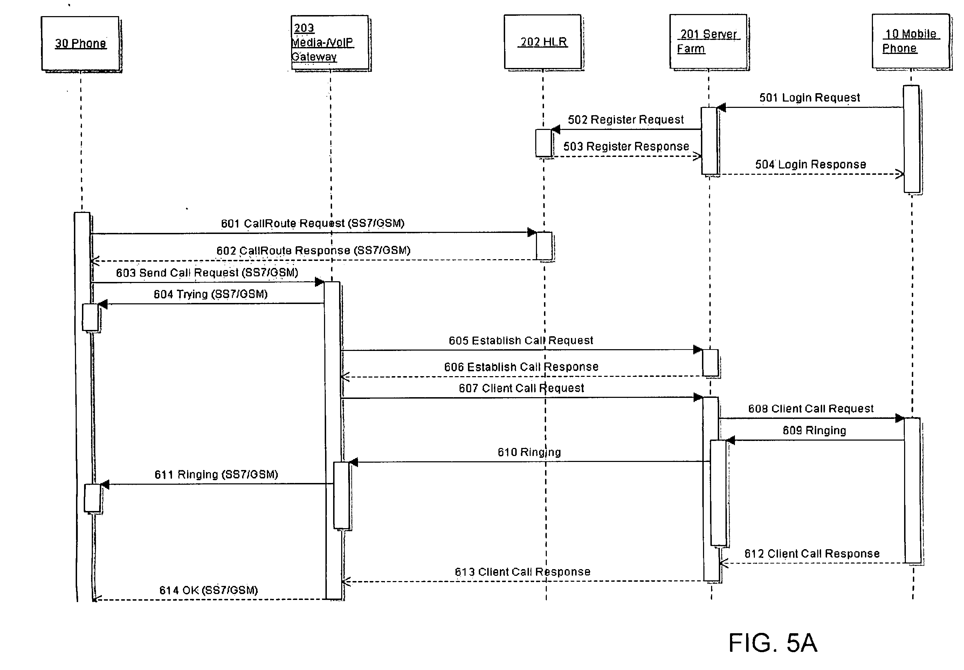

With general reference to the figures and with special reference now to figure 2 the inventional method can be used with the inventional system 20 interconnected between both communication partners, for doing fixnet-to-fixnet calls, from and to fixnet phones or PCs 10, 30, but in particular telephone calls of which at least one of the communication partners is a mobile communication device 10, 30. It suffices, when one of the two partners has a client application installed which performs the respective portion of the inventional workflow as described later below with reference to figures 5A and 5B.

The inventional software in general enables end-users with mobile phones, fixnet phones or computers to make voice conversations using a data channel over the IP protocol. The voice conversation can be:
- Client-to-client: between devices with inventional software installed
- "SIP Out": devices with inventional software installed call to any device or number (without inventional software installed)
- "SIP In": devices without inventional software call devices with inventional software installed

Device 10 is a mobile Phone or a fixnet phone or a PC with inventional client software: The phone or computer has a piece of inventional software installed which allows to communicate with the System using a data channel over IP protocol to establish voice transmission to phones with or without inventional software installed on it.

The inventionally modified system 20 allows to have client-to-client, "SIP Out" and "SIP In" voice communication for devices with Inventional software installed on it.

The device 30 may be a mobile phone or a fixnet phone or PC without Inventional client software: Any device without inventional software on it with the ability for voice communication.

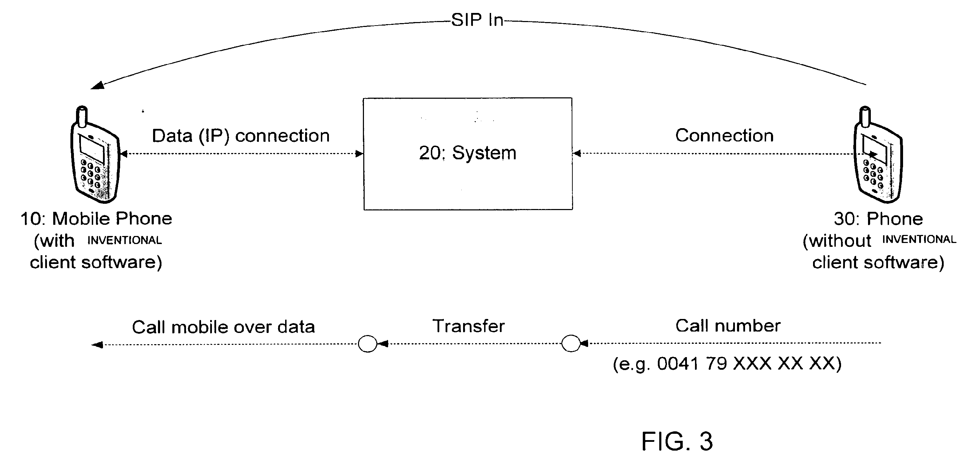

Figure 3 is set into contrast with Figure 1. A mobile phone user with his phone 30 not being equipped with an inventional client application may use an inventional "SIP-in" connection under usage of the inventional server 20 for doing a VoIP mobile to a mobile communication partner being equipped with an inventional client application. In figure 3 the inventional method provides for a full Voice over IP connection even in difficult environments including fast moving end devices.

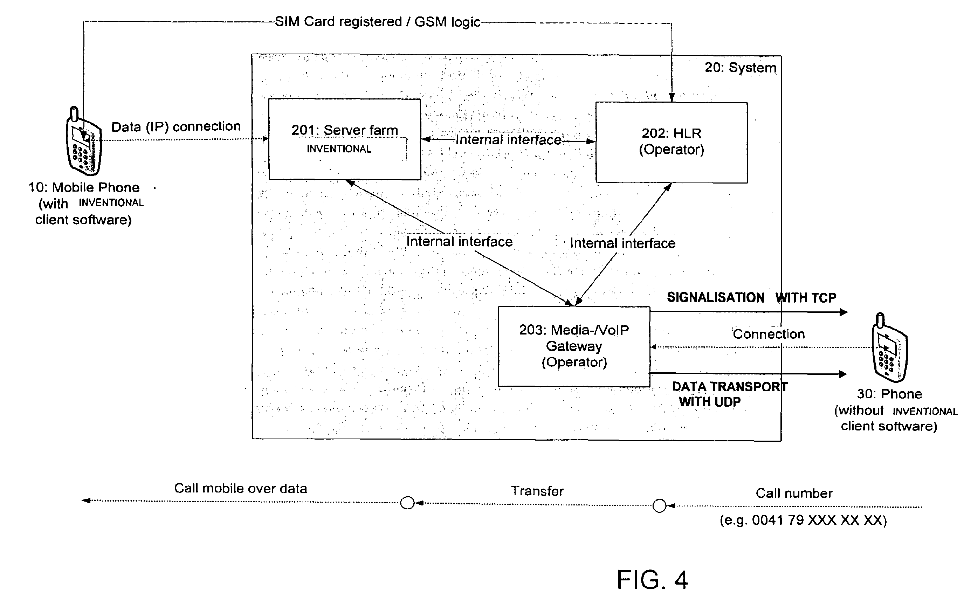

Figure 4 illustrates the major building blocks of a preferred embodiment of the server system 20 interconnected between the calling partner's devices 10, and 30, respectively.

### Server farm 201:

The system 20 comprises several Linux-based servers, i.e. a server farm 201 on which the inventional server software is installed which allows to handle voice transmission and which allows to properly coordinate with Home Location register 202 (HLR) and the Media-/VoIP Gateway 203 (Operator).

### The Home Location Register (HLR) 202:

A Home Location Register (HLR) is used in prior art. It is basically a database that contains semi-permanent mobile subscriber information for a wireless carriers' entire subscriber base. HLR subscriber information includes the International Mobile Subscriber Identity (IMSI), service subscription information, location information (the identity of the currently serving Visitor Location Register (VLR) to enable the routing of mobile-terminated calls), service restrictions and supplementary services information. The HLR is provided by an operator.

### The Media-/VoIP Gateway 203:

This is a prior art gateway/platform for incoming and outgoing calls for IP and non-IP based voice communication. This gateway/platform usually consists of several components. This gateway/platform is provided by an operator.

Unlike prior art mobile VoIP technology, and according to a basic aspect of the invention the signalisation of the call is transmitted under usage of the TCP, and the data is transported under usage of the UDP, a part of the ISO/OSI transport layer.

Figure 5A and 5B (in continuation) are respective schematic interaction diagrams illustrating the control flow of the most important steps of a preferred embodiment of the inventional communication method.

General remark: Some process steps and iterations are marked with "(SS7/GSM)" in figures 5A, and 5B. This means that those process iterations are part of the classical prior art signalling used in telephony (e.g. SS7, GSM) and that those process iterations have not been newly designed or programmed, but are part of the inventional method as a whole.

### Procedure of Registering at network:

*Step 501 Login Request:* The Mobile Phone 10 sends a request to login to the Server Farm 201.
*Step 502 Register Request:* The Server Farm 201 sends a request to HLR 200 to register the mobile phone in the whole network as "data" telephone (e.g. reachable over data channel)
*Step 503 Register Response:* The HLR 200 sends an answer to Server Farm 201 that the registering was successful.
*Step 504 Login Response:* The Server Farm 201 sends an answer to. Mobile Phone 10 that the registering was successful.

Procedure of Establishing a call to a Mobile Phone 10 which was registered at the network (see steps above):
*Step 601 CallRoute Request (SS7):* The Phone 30 sends a request through the network to find out where to route the call to. The network requests ends at the HLR 202 (as the SIM of the Mobile Phone 20 is registered at HLR 202).
*Step 602 CallRoute Response (SS7) :* As the Mobile Phone 10 is registered as "data" in the network, the HLR 202 sends back the correct signalling address - which points to the Media-/VoIP-Gateway 203 - through the network to Phone 30 (so the Phone 30 "knows" where to connect to).
*Step 603 Send Call Request (SS7):* The Phone 30 sends a call request to the Media-/VoIP-Gateway 203.
*Step 604 Trying (SS7):* The Media-/VoIP-Gateway 203 sends back a signal to Phone 30 that it is trying to reach Mobile Phone 10.
*Step 605 Establish Call Request:* The Media-/VoIP-Gateway 203 sends a request to the Server farm 201 to connect to Mobile Phone 10.
*Step 606 Establish Call Response:* The Server farm 201 sends back a signal to the Media-/VoIP-Gateway 203 to proceed.
*Step 607 Client Call Request:* The Media-/VoIP-Gateway 203 sends a request to the Server farm 201 to call the Mobile Phone 10.
*Step 608 Client Call Request:* The Server farm 201 sends a call request to the Mobile Phone10 (The Mobile phone 10 starts ringing).
*Step 609 Ringing:* The Mobile Phone 10 sends back a signal that it is ringing to the Server farm 201.
*Step 610 Ringing:* The Server farm 201 sends back a signal that it is ringing to the Media-/VoIP-Gateway 203.
*Step 611 Ringing (SS7):* The Media-/VoIP-Gateway 203 sends back a signal that it is ringing to the Phone 30.
*Step 612 Client Call Response:* (the call request is accepted by the user of the Mobile Phone 10). The Mobile Phone 30 sends a response to initiate the voice conversation to the Server farm 201.
*Step 613 Client Call Response:* The Server farm 201 sends a response to initiate the voice conversation to the Media-/VoIP-Gateway 203.
*Step 614 OK (SS7*/*GSM):* The Media-/VoIP-Gateway 203 sends a response to initiate the voice conversation to the Phone 30.

The procedure of Voice communication between Phone 30 and Mobile Phone 10 where a call was established (see steps above):

The following process steps are run as long as the voice communication is active:
*Step* 700/705 Voice transmission (SS7/GSM). The Phone 20 sends and receives voice to/from Media-/VoIP-Gateway 203.
*Step* 701/704 UDP Data Forwarding and signalisation forwarding. The Media-/VoIP-Gateway 203 sends and receives voice - which is transferred trough UDP data protocol - to/from Mobile Phone 10.

The Media-/VoIP-Gateway 203 sends and receives signalistion information, such as the control correction blocks - which is transferred trough the TCP protocol - to/from Mobile Phone 10.

The voice communication between Phone 30 and Mobile Phone 10 is closed - by a user - where a voice communication was established (see steps above):
The Mobile Phone 10 closes the call:
   *Step* 800 Client Close Call: The Mobile Phone 10 sends a message to Server farm 201 that call was closed.
   *Step* 801 Client Close Call: The Server farm 201 sends a message to Media-VoIP-Gateway 203 that call was closed.
   *Step* 802 Client Close Call (SS7/GSM): The Media-VoIP-Gateway 203 sends a message to Phone 30 that the call was closed.

The Phone 30 closes the call:
*Step* 900 Client Close Call (SS7/GSM): The Phone 30 sends a message to Media-VoIP-Gateway 203 that call was closed.
*Step* 901 Client Close Call: The Media-VoIP-Gateway 203 sends a message to Server farm 201 that call was closed.
*Step* 902 Client Close Call: The Server farm 201 sends a message to Mobile Phone 10 that call was closed.

It should be noted that during the workflow as described above the signalization information of the call is transmitted via the TCP protocol, and that voice data of the call is transmitted via the UDP protocol.

The inventional method and system can be modified in some aspects by moving the inventional functionality to separate different hardware components which are used then as auxiliary devices, adapters, etc.. Further, the server application part is open to be distributed also between more than one server hardware units.

As to the modified AMR CODEC in use, also similar smaller or slightly larger packet lengths can be used.

The invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus.

The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

The inventional method can also be implemented in a hardware chip, in a respective integrated circuit chip. The chip design is created in a graphical computer programming language, and stored in a computer storage medium (such as a disk, tape, physical hard drive, or virtual hard drive such as in a storage access network). If the designer does not fabricate chips or the photolithographic masks used to fabricate chips, the designer transmits the resulting design by physical means (e.g., by providing a copy of the storage medium storing the design) or electronically (e.g., through the Internet) to such entities, directly or indirectly. The stored design is then converted into the appropriate format (e.g., GDSII) for the fabrication of photolithographic masks, which typically include multiple copies of the chip design in question that are to be formed on a wafer. The photolithographic masks are utilized to define areas of the wafer (and/or the layers thereon) to be etched or otherwise processed.

## Claims

1. A method for operating a telephone call between a caller telephone device and a called mobile communication device, wherein said communication is at least partly performed by using Voice-over-IP functionality,
**characterised by** the steps of:
a) transmitting signalization information of the call via the TCP protocol, and
b) transmitting voice data of the call via the UDP protocol.

2. The method according to claim 1, wherein a particular modification of the AMR CODEC is used for converting an audio signal corresponding to the voice to digital data and vice versa, which is modified by tolerating transmission bit rates until 5,7 kbit/s.

3. The method of claim 1, comprising the steps of:
a) the caller provider registering (502, 503, 504) an incoming login request issued by a caller requesting a telephone call by using a data communication session,
b) said caller's provider system switching the call request to said mobile communication provider system of the called mobile communication device,
c) said mobile communication provider system of the called mobile communication device, by using its HLR functionality, invoking a data channel including the session parameters, to a (VoIP) server application managing the requested data communication session to the called mobile communication device via the Internet,
d) said (VoIP) server application establishing or using a respective data channel to the called mobile phone device by invoking a operational communication dialogue with a respective client (VoIP) application implemented at the called mobile phone device able to convert received digital data to an analog voice signal to be output by means of a speaker unit to the called person,
e) during operation of the call the caller's provider system,
1) said mobile communication provider system receiving analog signals or respective digital data corresponding to the caller's voice signal,
2) said mobile communication provider system forwarding said data to said (VoIP) server application,
3) said (VoIP) server application sending said data to the receiving port of said called mobile phone device,
4) said client (VoIP) application implemented at said called device converting said received data into an analogue voice signal to be output via speakers to the called person,
5) said client (VoIP) application converting an analog voice signal associated with the called person into digital data and sending said data to said (VoIP) server application via the Internet,
6) said (VoIP) server application sending said digital data to said mobile communication provider system of the called mobile communication device
7) said mobile communication provider system of the called mobile communication device sending said digital data or respective analog data to said caller provider,
8) said caller provider transmitting said data or respective signal back to said caller telephone device.

4. A method for operating a telephone call between a caller telephone device and a called mobile communication device, wherein said communication is at least partly performed by using Voice-over-IP functionality,
**characterised by** the steps of:
said (VoIP) server application establishing or using a pre-established respective data channel to the called mobile phone device by invoking or using, respectively, an operational communication dialogue with a respective client (VoIP) application implemented at the called mobile phone device, and
during operation of the call said (VoIP) server application sending said call data to the receiving port of said called mobile phone device, and
said (VoIP) server application sending digital data corresponding to the called person's voice to said mobile communication provider system of the called mobile communication device,
wherein the signalization information of the call is transmitted via the TCP protocol, and
the voice data of the call is transmitted via the UDP protocol.

5. A method for operating a telephone call between a caller telephone device and a called mobile communication device, wherein said communication is at least partly performed by using Voice-over-IP functionality,
**characterised by** the steps of:
a) using a respective data channel to the Internet server communication manager by using a operational communication dialogue with a respective server (VoIP) application,
b) during operation of the call the caller's provider system,
c) said client (VoIP) application implemented at said called device converting data received from said server application into an analogue voice signal to be output via speakers to the called person,
5) said client (VoIP) application converting an analog voice signal associated with the called person into digital data and sending said data to said (VoIP) server application via the Internet,
d) wherein the signalization information of the call is transmitted via the TCP protocol, and
e) the voice data of the call is transmitted via the UDP protocol.

6. An electronic data processing system for operating a telephone call between a caller telephone and a called mobile communication device, wherein said communication is at least partly performed by using Voice-over-IP functionality, said system
having a functional server application component being **characterised by** the steps of:
a) said (VoIP) server application establishing or using a pre-established respective data channel to the called mobile phone device by invoking or using, respectively, an operational communication dialogue with a respective client (VoIP) application implemented at the called mobile phone device, and
b) during operation of the call said (VoIP) server application sending said call data to the receiving port of said called mobile phone device, and
c) said (VoIP) server application sending digital data corresponding to the called person's voice to said mobile communication provider system of the called mobile communication device,
d) wherein the signalization information of the call is transmitted via the TCP protocol, and
e) the voice data of the call is transmitted via the UDP protocol.

7. A mobile communication device ready for operating a telephone call between a caller telephone device and itself, wherein said communication is at least partly performed by using Voice-over-IP functionality, said mobile communication device
having a functional client application component being **characterised by** the steps of:
a) using a respective data channel to the Internet server communication manager by using a operational communication dialogue with a respective server (VoIP) application,
b) during operation of the call the caller's provider system,
c) said client (VoIP) application implemented at said called device converting data received from said server application into an analogue voice signal to be output via speakers to the called person,
5) said client (VoIP) application converting an analog voice signal associated with the called person into digital data and sending said data to said (VoIP) server application via the Internet,
d) wherein the signalization information of the call is transmitted via the TCP protocol, and
e) the voice data of the call is transmitted via the UDP protocol.

8. A computer program product for operating a telephone call between a caller telephone device and a called mobile communication device, wherein said communication is at least partly performed by using Voice-over-IP functionality, comprising a computer useable medium including a computer readable program, wherein the computer readable program includes a server functional component that when executed on a computer causes the computer to perform the steps of:
a) establishing or using a pre-established respective data channel to the called mobile phone device by invoking or using, respectively, an operational communication dialogue with a respective client (VoIP) application implemented at the called mobile phone device, and
b) during operation of the call said (VoIP) server application sending said call data to the receiving port of said called mobile phone device, and
c) said (VoIP) server application sending digital data corresponding to the called person's voice to said mobile communication provider system of the called mobile communication device,
d) wherein the signalization information of the call is transmitted via the TCP protocol, and
e) the voice data of the call is transmitted via the UDP protocol.

9. A computer program product for operating a telephone call between a caller telephone device and a called mobile communication device, wherein said communication is at least partly performed by using Voice-over-IP functionality, comprising a computer useable medium including a computer readable program, wherein the computer readable program includes a client functional component that when executed on a computer causes the computer to perform the steps of:
a) using a respective data channel to the Internet server communication manager by using a operational communication dialogue with a respective server (VoIP) application,
b) during operation of the call the caller's provider system,
c) said client (VoIP) application implemented at said called device converting data received from said server application into an analogue voice signal to be output via speakers to the called person,
5) said client (VoIP) application converting an analog voice signal associated with the called person into digital data and sending said data to said (VoIP) server application via the Internet,
d) wherein the signalization information of the call is transmitted via the TCP protocol, and
e) the voice data of the call is transmitted via the UDP protocol.
